# EUROPÄISCHE PATENTSCHRIFT

(11) **EP 3 080 377 B1**
(45) Veröffentlichungstag und Bekanntmachung des Hinweises auf die Patenterteilung: **27.09.2023**
(21) Anmeldenummer: 14808619.2
(22) Anmeldetag: 05.12.2014
(51) Int. Cl.: E06B 3/663

(54) **ISOLIERVERGLASUNG MIT VERBESSERTER ABDICHTUNG**
DOUBLE GLAZING HAVING IMPROVED SEALING
VITRAGE ISOLANT À ÉTANCHÉITÉ AMÉLIORÉE

(30) Priorität: 12.12.2013 EP 13196866
(43) Veröffentlichungstag der Anmeldung: 19.10.2016
(73) Patentinhaber: SAINT-GOBAIN GLASS FRANCE, 92400 Courbevoie (FR)
(72) Erfinder: MESSERE, Rino, 4577 Modave (BE)
(74) Vertreter: Gebauer, Dieter Edmund
(86) Internationale Anmeldenummer: PCT/EP2014/076736
(87) Internationale Veröffentlichungsnummer: WO 2015/086457

(56) Entgegenhaltungen:
- US-A1- 2009 301 637

## Beschreibung

Die Erfindung betrifft Isolierverglasung mit verbesserter Abdichtung, ein Verfahren zu deren Herstellung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Besonders deutlich wird dieser Effekt bei Hochhäusern mit teilweisen oder kompletten Glasfassaden. Die notwendigen Mehrkosten für Heizung und Klimaanlagen machen einen nicht zu unterschätzender Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Isolierverglasungen, die vor allem im Zuge immer schneller steigender Rohstoffpreise und strengeren Umweltschutzauflagen nicht mehr aus dem Gebäudebau wegzudenken sind.

Isolierverglasungen werden dabei aus mindestens zwei Scheiben gefertigt, die über mindestens einen umlaufenden Abstandshalter miteinander verbunden sind. Je nach Ausführungsform ist der als Verglasungsinnenraum bezeichnete Zwischenraum der beiden Scheiben luft- oder gasgefüllt, in jedem Fall jedoch frei von Feuchtigkeit. Ein zu hoher Gehalt an Feuchtigkeit im Verglasungszwischenraum führt besonders bei kalten Außentemperaturen zur Kondensation von Wassertropfen im Scheibenzwischenraum, was unbedingt zu vermeiden ist. Zur Aufnahme der nach der Montage im System verbleibenden Restfeuchtigkeit können beispielsweise mit einem Trockenmittel gefüllte Hohlkörperabstandshalter verwendet werden. Da die Aufnahmekapazität des Trockenmittels jedoch begrenzt ist, ist auch in diesem Fall die Abdichtung des Systems von enormer Wichtigkeit um das Eindringen weiterer Feuchtigkeit zu vermeiden. Bei gasgefüllten Isolierverglasungen, in deren Verglasungsinnenraum beispielsweise eine Argonfüllung eingebracht ist, muss des Weiteren auch eine Dichtigkeit gegenüber Gasen gewährleistet sein.

Um eine verbesserte Dichtigkeit von Isolierverglasungen zu gewährleisten sind bereits die verschiedensten Modifikationen im Bereich der Abstandshalter bekannt. Bereits in DE 40 24 697 A1 wird die Problemstellung diskutiert, dass die üblichen einfach- oder doppelt gedichteten Isolierglas-Randverbunde aus Materialien wie Polysulfidpolymer, Butyl-Hot-Melt, Silikonkautschuk, Polymercaptan oder Polyurethan keine dauerhaft hinreichende Abdichtung gewährleisten können und im Laufe der Zeit ein unerwünschter Gasaustausch zwischen Verglasungsinnenraum und Umgebung stattfindet. Eine verbesserte Abdichtung erfolgt gemäß DE 40 24 697 A1 durch eine Modifikation des Abstandshalters, auf dessen Scheibenkontaktflächen Polyvinylidenchlorid-Folien oder Beschichtungen aufgebracht sind. Eine weitere Maßnahme zur Verbesserung der Dichtigkeit von Isolierverglasungen ist die Beschichtung von polymeren Abstandshaltern mit Metallfolien oder alternierenden Metall-Polymer-Schichtsystemen, wie beispielsweise in EP 0 852 280 A1 und WO 2013/104507 A1 offenbart. Diese gewährleisten eine hohe Dichtigkeit des Abstandshalters bei gleichzeitiger Kompatibilität mit den zur Montage verwendeten Dichtstoffen.

US 2009/0301637 A1 zeigt eine Isolierverglasung mit Abstandshalter, wobei der Abstandshalter zwischen den Glasscheiben verklebt. Ein primäres und sekundäres Dichtmittel im äußeren Scheibenzwischenraum versiegeln den Verglasungsinnenraum samt fixiertem Abstandshalter.

Trotz dieser Weiterentwicklungen im Bereich der Abstandshalter bleibt unabhängig von deren Dichtigkeit immer noch die Versiegelung zwischen Abstandshalter und Scheiben und die Versiegelung des äußeren Scheibenzwischenraums als mögliche Schwachstelle erhalten.

Aufgabe der vorliegenden Erfindung ist es, eine Isolierverglasung, die über eine verbesserte Abdichtung des äußeren Scheibenzwischenraums verfügt, sowie ein wirtschaftliches Verfahren zu deren Herstellung bereitzustellen.

Die Aufgabe der vorliegenden Erfindung wird erfindungsgemäß durch eine Isolierverglasung, ein Verfahren zu deren Herstellung und deren Verwendung nach den Ansprüchen 1, 12 und 14 gelöst. Bevorzugte Ausführungen der Erfindung gehen aus den Unteransprüchen hervor.

Die erfindungsgemäße Isolierverglasung umfasst mindestens eine erste Scheibe und eine zweite Scheibe und einen Abstandshalter zwischen der ersten Scheibe und der zweiten Scheibe. Der Abstandshalter umfasst eine Verglasungsinnenraumfläche, eine Außenfläche und zwei Scheibenkontaktflächen, wobei an die Verglasungsinnenraumfläche der Verglasungsinnenraum der Isolierverglasung angrenzt und an die Außenfläche der äußere Scheibenzwischenraum angrenzt. Die Scheibenkontaktflächen sind bevorzugt parallel zueinander. Der vom umlaufenden Abstandshalter und den Scheiben eingeschlossene Verglasungsinnenraum sollte dabei hermetisch dicht gegen Gasaustausch und Eindringen von Feuchtigkeit versiegelt sein. Dazu ist zwischen den Scheibenkontaktflächen des Abstandshalters und den Scheiben ein primäres Dichtmittel aufgebracht, das einerseits zur Verklebung des Abstandshalters dient und andererseits den Spalt zwischen Abstandshalter und Scheibe versiegelt. Im äußeren Scheibenzwischenraum ist angrenzend an die Außenfläche des Abstandshalters ein sekundäres Dichtmittel eingebracht, das den Scheibenzwischenraum in seiner gesamten Breite zwischen der ersten Scheibe und der zweiten Scheibe ausfüllt. Dadurch wird zum einen das primäre Dichtmittel und zum anderen der Abstandshalter abgedeckt. Bei einem eventuellen Versagen des primären Dichtmittels oder einer Undichtigkeit des Abstandshalters ist die fehlerfreie Funktion der Isolierverglasung somit auch weiterhin gewährleistet. Das primäre und das sekundäre Dichtmittel dienen somit einer redundanten Abdichtung. Angrenzend an das sekundäre Dichtmittel ist des Weiteren ein tertiäres Dichtmittel in den äußeren Scheibenzwischenraum eingebracht, das ebenfalls vollflächig zwischen der ersten Scheibe und der zweiten Scheibe verfüllt ist. Dieses tertiäre Dichtmittel bewirkt eine Verklebung der ersten und der zweiten Scheibe und gewährleistet somit eine ausreichende mechanische Stabilität der Isolierverglasung.

Durch die erfindungsgemäße Kombination eines primären und sekundären Dichtmittels ist eine verbesserte Abdichtung möglich, die zu einer wesentlichen Verlängerung der Lebensdauer der Isolierverglasung führt. Eine erfindungsgemäße doppelte Abdichtung über ein primäres und sekundäres Dichtmittel hat gegenüber einer einfachen Abdichtung den Vorteil, dass mehrschichtige Systeme wesentlich weniger fehleranfällig sind als ein einfaches Schichtsystem gleicher Dicke. Ein Fehler in einer der Schichten eines Mehrschichtsystems führt dabei nicht zu einem Funktionsverlust. Im Vergleich dazu kann bei einer Einzelschicht bereits ein kleiner Defekt zu einem vollständigen Versagen führen. Das tertiäre Dichtmittel dient weniger der Abdichtung als der mechanischen Stabilität der Verglasung.

In einer bevorzugten Ausführungsform enthalten das sekundäre Dichtmittel und das primäre Dichtmittel Butylkautschuk, Polyisobutylen, Polyethylenvinylalkohol, Ethylenvinylacetat, Polyolefin-Kautschuk, Copolymere und/oder Gemische davon, wobei das sekundäre Dichtmittel und das primäre Dichtmittel auch unterschiedliche Zusammensetzungen haben können. Das primäre Dichtmittel und das sekundäre Dichtmittel sind gas- und wasserdicht, so dass der Verglasungsinnenraum gegen den Eintritt von Luftfeuchtigkeit sowie das Entweichen eines Füllgases versiegelt ist.

Das tertiäre Dichtmittel enthält bevorzugt Polysulfide, Silikone, Silikonkautschuk, Polyurethane, Polyacrylate, Copolymere und/oder Gemische davon. Derartige Stoffe haben eine sehr gute Haftung auf Glas, so dass das tertiäre Dichtmittel vor allem der Verklebung der Scheiben dient.

Eine Abdichtung des äußeren Scheibenzwischenraums mit nur einem primären und einem tertiären Dichtmittel, wie nach dem Stand der Technik bekannt, ist aus verschiedensten Gründen nicht optimal. Die zur Verklebung verwendeten Dichtmittel, wie Silikon, sind gas- und wasserdurchlässig. Somit erfolgt die Abdichtung nur über ein primäres Dichtmittel, wie Polyisobutylen, so dass ein kleiner Defekt bereits zu einem vollständigen Versagen der Verglasung führt. Ferner besteht keine zusätzliche Abdichtung des Abstandshalters, wodurch eine Undichtigkeit des Abstandshalters ebenfalls zu einem vollständigen Funktionsverlust führt. Im Gegensatz dazu weist die erfindungsgemäße Isolierverglasung eine Kombination aus drei Dichtmitteln auf, wobei das primäre und sekundäre Dichtmittel eine Abdichtung des Verglasungsinnenraums bewirken und über das tertiäre Dichtmittel die Verklebung der Scheiben erfolgt. Das sekundäre Dichtmittel dient dabei als redundante Sicherung falls Undichtigkeiten im primären Dichtmittel oder Abstandshalter auftreten. Im Vergleich zu den nach dem Stand der Technik bekannten Isolierverglasungen verbessert diese erfindungsgemäße Kombination von Dichtmitteln somit wesentlich die Lebensdauer der Verglasung.

In einer möglichen Ausführungsform weist die Außenfläche des Abstandshalters eine Bohrung, beispielsweise zur Befüllung mit Trockenmittel, auf. Die erfindungsgemäße Abdichtung des äußeren Scheibenzwischenraums ist hier besonders vorteilhaft, da auch die Bohrungsöffnung über das sekundäre Dichtmittel gas- und wasserdicht verschlossen wird.

In einer alternativen Ausführungsform ist die Bohrung auf einer der Scheibenkontaktflächen des Abstandshalters angebracht. Dabei wird die Bohrungsöffnung vorteilhaft über das primäre und das sekundäre Dichtmittel redundant abgedichtet.

Erfindungsgemäß ist der Penetrationswert des sekundären Dichtmittels kleiner als der Penetrationswert des primären Dichtmittels. Alle hier verwendeten Angaben beziehen sich dabei auf den Penetrationswert nach ISO 2137 - DIN 5180 gemessen bei einer Temperatur von 60°C. Der Penetrationswert ist ein Maß für die Härte des Materials. Demnach ist ein Material mit kleinem Penetrationswert härter als ein Material mit großem Penetrationswert. Die Wahl eines weichen primären Dichtmittels ist unter anderem bei der Verarbeitung vorteilhaft. Dazu wird ein Strang des primären Dichtmittels auf die Scheibenoberflächen aufgebracht und mit den Scheibenkontaktflächen des Abstandshalters verpresst. Das primäre Dichtmittel füllt dabei den Spalt zwischen Scheiben und Abstandshalter vollflächig aus. Dies ist nur durch die Wahl eines weichen Materials zu bewerkstelligen. Ein hartes Material würde hier zu einer mangelhaften Abdichtung führen.

Das sekundäre Dichtmittel füllt hingegen den äußeren Scheibenzwischenraum zwischen erster Scheibe und zweiter Scheibe vollflächig aus. Dabei ist die Wahl eines härteren Materials besonders vorteilhaft um auch bei hohen Temperaturen eine sichere Abdichtung zu erreichen. Weiche Materialien mit hohen Penetrationswerten beginnen bei starker Erwärmung zu fließen, wodurch sich die einzelnen Komponenten der Isolierverglasung gegeneinander verschieben können und/oder es zu einem Versagen der Dichtung kommt. Durch den Einsatz eines härteren Dichtungsmaterials wird dieses vermieden. Selbst wenn das primäre Dichtmittel bei starker Erhitzung zu fließen beginnt ist der Abstandshalter somit immer noch über das sekundäre Dichtmittel in seiner Position fixiert und der Verglasungsinnenraum abgedichtet. Die Kombination eines primären Dichtmittels mit hohem Penetrationswert und eines sekundären Dichtmittels mit einem niedrigeren Penetrationswert ermöglicht demnach eine besonders sichere redundante Abdichtung, die auch einer starken Erwärmung standhält.

Der Penetrationswert des primären Dichtmittels liegt bevorzugt zwischen 45 und 100, besonders bevorzugt zwischen 50 und 70. Der Penetrationswert des sekundären Dichtmittels wird bevorzugt zwischen 20 und 40 gewählt, besonders bevorzugt zwischen 30 und 40. Innerhalb dieser Bereiche ist eine besonders gute Abdichtung des Verglasungsinnenraums zu erreichen.

Die Dicke des primären Dichtmittels beträgt bevorzugt 0,1 mm bis 0,5 mm.

Die Dicke des sekundären Dichtmittels beträgt bevorzugt 0,5 mm bis 5 mm, besonders bevorzugt 1 mm bis 2 mm.

Die Dicke des tertiären Dichtmittels beträgt bevorzugt 2 mm bis 30 mm, besonders bevorzugt 5 mm bis 10 mm.

Somit wird die Dicke des tertiären Dichtmittels im Vergleich zu den Dicken des primären und sekundären Dichtmittels wesentlich größer gewählt. Bereits eine dünne Schicht des primären und sekundären Dichtmittels reicht zur Abdichtung aus, während das zur Verklebung eingesetzte tertiäre Dichtmittel in einer größeren Schichtdicke eingesetzt wird um eine möglichst hohe mechanische Stabilität zu erreichen.

In einer möglichen Ausführungsform umfasst die Isolierverglasung mehr als zwei Scheiben.

Dabei kann beispielsweise eine dritte Scheibe beispielsweise zwischen der ersten Scheibe und der zweiten Scheibe im oder am Abstandshalter fixiert sein. In dieser Ausführungsform besteht weiterhin ein einzelner äußerer Scheibenzwischenraum, der erfindungsgemäß abgedichtet ist.

Alternativ können auch mehrere Abstandshalter verwendet werden. An der ersten Scheibe und/oder zweiten Scheibe ist dabei ein weiterer Abstandshalter parallel zu dem zwischen erster und zweiter Scheibe befindlichen Abstandshalter fixiert. Gemäß dieser Ausführungsform weist die Isolierverglasung mehrere äußere Scheibenzwischenräume auf, die erfindungsgemäß abgedichtet sind.

Als Abstandshalter können alle nach dem Stand der Technik bekannten Abstandshalter verwendet werden. Beispielhaft sind hier polymere und metallische Abstandshalter erwähnt.

Polymere Abstandshalter enthalten bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), besonders bevorzugt Acrylnitril-Butadien-Styrol (ABS), Acrylester-Styrol-Acrylnitril (ASA), Acrylnitril-Butadien-Styrol / Polycarbonat (ABS/PC), Styrol-Acrylnitril (SAN), PET/PC, PBT/PC und/oder Copolymere oder Gemische davon.

Polymere Abstandshalter können optional auch weitere Bestandteile, wie beispielsweise Glasfasern, enthalten.

Metallische Abstandshalter werden bevorzugt aus Aluminium oder Edelstahl gefertigt.

Der Abstandshalter ist bevorzugt als Hohlprofil ausgeformt, besonders bevorzugt als Hohlprofil mit einer Wandstärke von 0,5 mm bis 10 mm. Im Inneren des Abstandshalters befindet sich somit mindestens eine Hohlkammer.

Der Abstandshalter enthält bevorzugt ein Trockenmittel, bevorzugt Kieselgele, Molekularsiebe, CaCl₂, Na₂SO₄, Aktivkohle, Silikate, Bentonite, Zeolithe und/oder Gemische davon. Das Trockenmittel ist bevorzugt in den Abstandshalter eingearbeitet. Besonders bevorzugt befindet sich das Trockenmittel in einer Hohlkammer des Abstandshalters.

Der Abstandshalter weist bevorzugt entlang der Scheibenkontaktflächen eine Höhe von 5 mm bis 15 mm, besonders bevorzugt von 5 mm bis 10 mm, auf.

Die Breite der Verglasungsinnenraumfläche, die den Abstand der ersten Scheibe und der zweiten Scheibe definiert, beträgt 4 mm bis 30 mm, bevorzugt 8 mm bis 16 mm.

Der Abstandshalter umfasst optional eine Isolationsfolie auf der Außenfläche. Besonders in Verbindung mit polymeren Abstandshaltern werden derartige Isolationsfolien eingesetzt um eine verbesserte Dichtigkeit und Isolation des Abstandshalters zu erreichen. Die Isolationsfolie umfasst beispielsweise eine oder mehrere polymere Schichten sowie eine oder mehrere metallische oder keramische Schichten. Derartige Isolationsfolien sind beispielsweise aus WO2013/104507 bekannt.

Eine Isolationsfolie auf der Außenfläche ist jedoch selbst bei polymeren Abstandshaltern nicht zwingend erforderlich, da für eine hinreichende Abdichtung des Abstandshalters die erfindungsgemäße Kombination aus sekundärem und tertiärem Dichtmittel genügt.

Der Verglasungsinnenraum der Isolierverglasung ist bevorzugt mit einem Schutzgas, bevorzugt mit einem Edelgas, vorzugsweise Argon oder Krypton befüllt, die den Wärmeübergangswert im Isolierverglasungszwischenraum reduzieren.

In einer bevorzugten Ausführungsform weist die Verglasungsinnenraumfläche mindestens eine Öffnung auf. Bevorzugt sind mehrere Öffnungen in der Verglasungsinnenraumfläche angebracht. Die Gesamtzahl der Öffnungen hängt dabei von der Größe der Isolierverglasung ab. Die Öffnungen verbinden die Hohlkammer des Abstandshalters mit dem Verglasungsinnenraum, wodurch ein Gasaustausch zwischen diesen möglich wird. Dadurch wird eine Aufnahme von Luftfeuchtigkeit durch ein in den Hohlkammern befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus den Hohlkammern in die Scheibenzwischenräume eindringen kann.

An den Ecken der Isolierverglasung ist der umlaufende Abstandshalter bevorzugt über Eckverbinder miteinander verknüpft. Derartige Eckverbinder können beispielsweise als Kunststoffformteil mit Dichtung ausgeführt sein, in dem zwei mit einem Gärungsschnitt versehene Abstandshalter zusammenstoßen. Grundsätzlich sind verschiedenste Geometrien der Isolierverglasung möglich, beispielsweise rechteckige, trapezförmige und abgerundete Formen. Zur Herstellung runder Geometrien kann der Abstandshalter beispielsweise im erwärmten Zustand gebogen werden. Die Eckverbinder enthalten nach dem Stand der Technik ebenfalls eine Dichtung, die bei Montage der Einzelteile zusammengedrückt wird und somit abdichtet. Dazu ist allerdings eine sehr exakte und passgenaue Montage notwendig, da ein Verrutschen der Dichtung zu einer Undichtigkeit des Systems führt. Das erfindungsgemäße sekundäre Dichtmittel deckt auch die Eckverbinder des Abstandshalters ab, so dass eventuelle Undichtigkeiten kompensiert werden.

Die erste Scheibe und die zweite Scheibe verfügen über eine Dicke von 1 mm bis 50 mm, bevorzugt 3 mm bis 16 mm, besonders bevorzugt 3 mm bis 10 mm, wobei beide Scheiben auch unterschiedliche Dicken haben können.

Die erste Scheibe und/oder die zweite Scheibe enthalten Glas und/oder Polymere, bevorzugt Quarzglas, Borosilikatglas, Kalk-Natron-Glas, Polymethylmethacrylat und/oder Gemische davon. Über die zweite Scheibe hinausgehende weitere Scheiben umfassen ebenfalls diese Materialien.

Die Erfindung umfasst ferner ein Verfahren zur Herstellung einer erfindungsgemäßen Isolierverglasung umfassend die Schritte:
a) Montage des Abstandshalters mittels eines primären Dichtmittels über jeweils eine Scheibenkontaktfläche an der ersten Scheibe und der zweiten Scheibe,
b) Verpressen der Anordnung,
c) Einfüllen eines sekundäres Dichtmittels in den äußeren Scheibenzwischenraum und
d) Einfüllen eines tertiäres Dichtmittels in den äußeren Scheibenzwischenraum.

In Schritt a) wird das primäre Dichtmittel bevorzugt als Strang, beispielsweise mit einem Durchmesser von 1 mm bis 2 mm, auf die Scheibenkontaktflächen aufgetragen. Beim Verpressen der Scheibenanordnung verteilt sich dieser Strang geleichmäßig im Spalt zwischen der Scheibenkontaktfläche und der daran anliegenden Scheibe, wodurch es zur Abdichtung des Spalts kommt.

Das sekundäre Dichtmittel wird in Schritt c) bevorzugt direkt in den äußeren Scheibenzwischenraum hinein extrudiert.

In einer alternativen Ausführungsform des erfindungsgemäßen Verfahrens werden Schritt a) und c) gleichzeitig ausgeführt. Dabei erfolgt die Auftragung des primären Dichtmittels auf die Scheibenkontaktflächen gleichzeitig mit der Extrusion des sekundären Dichtmittels. Erst danach wird die Scheibenanordnung verpresst.

Das tertiäre Dichtmittel wird in Schritt d) ebenfalls bevorzugt in den äußeren Scheibenzwischenraum extrudiert.

Bevorzugt wird der Verglasungsinnenraum zwischen den Scheiben vor dem Verpressen der Anordnung mit einem Schutzgas gefüllt.

Die Erfindung umfasst des Weiteren die Verwendung einer erfindungsgemäßen Isolierverglasung als Gebäudeinnenverglasung, Gebäudeaußenverglasung und/oder Fassadenverglasung. Dabei ist auch die Verwendung in Kombination mit weiteren Elementen, wie beispielsweise Beleuchtungselementen, Heizelementen, Antennenelementen oder elektrisch schaltbaren Verglasungen, wie Displays oder elektrochromen Verglasungen, möglich. In derartigen Verglasungen wird eine Stromversorgung im Verglasungsinnenraum benötigt, so dass ein elektrischer Leiter, wie beispielsweise ein Anschlusselement, vom äußeren Scheibenzwischenraum in den Verglasungsinnenraum ragt. In einer bevorzugten Ausführungsform verfügt die Isolierverglasung über ein Anschlusselement, dessen äußeres Ende aus dem tertiären Dichtmittel herausragt und dort elektrisch kontaktierbar ist und dessen inneres Ende im Verglasungsinnenraum an dem elektrisch schaltbaren Element anliegt. Das Anschlusselement durchdringt dabei das tertiäre Dichtmittel, das sekundäre Dichtmittel und das primäre Dichtmittel und verläuft zwischen der Scheibenkontaktfläche des Abstandshalters und der benachbarten Scheibe.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: eine schematische Darstellung der erfindungsgemäßen Isolierverglasung,
- Figur 2a und 2b: eine mögliche Ausführungsform der erfindungsgemäßen Isolierverglasung und
- Figur 3: ein Flussdiagramm einer möglichen Ausführungsform des erfindungsgemäßen Verfahrens.

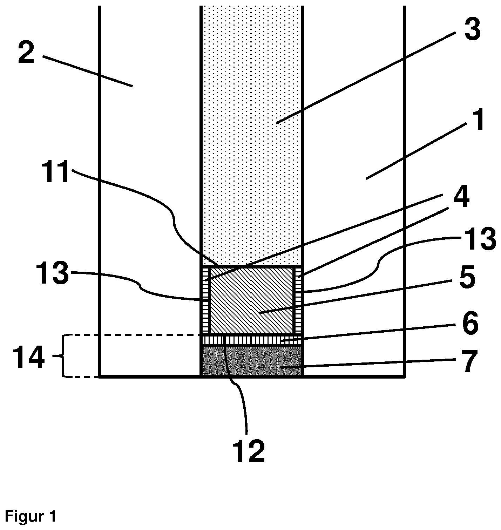

Figur 1 zeigt eine schematische Darstellung der erfindungsgemäßen Isolierverglasung im Querschnitt. Zwischen einer ersten Scheibe 1 und einer zweiten Scheibe 2 ist über ein primäres Dichtmittel 4 ein umlaufender Abstandshalter 5 angebracht. Das primäre Dichtmittel 4 verbindet dabei die Scheibenkontaktflächen 13 des Abstandshalters 5 mit den Scheiben. Der an die Verglasungsinnenraumfläche 11 des Abstandshalters 5 angrenzende Verglasungsinnenraum 3 wird als der von den Scheiben 1, 2 und dem Abstandshalter 5 begrenzte Raum definiert. Der an die Außenfläche 12 des Abstandshalters 5 angrenzende äußere Scheibenzwischenraum 14 ist ein streifen-förmiger umlaufender Abschnitt der Verglasung, der von je einer Seite von den beiden Scheiben 1, 2 und auf einer weiteren Seite von dem Abstandshalter 5 begrenzt wird und dessen vierte Kante offen ist. Auf die Außenfläche 12 des Abstandshalters 5 ist ein sekundäres Dichtmittel 6 aufgebracht. Dieses wird erst nach Montage des Abstandshalters in den äußeren Scheibenzwischenraum eingebracht und bedeckt den Zwischenraum zwischen beiden Scheiben vollflächig. Etwaige Undichtigkeiten des primären Dichtmittels 4 oder des Abstandshalters 5 sowie Ungenauigkeiten bei der Montage der Einzel-komponenten werden dadurch kompensiert. Auf das sekundäre Dichtmittel 6 ist des Weiteren ein tertiäres Dichtmittel 7 aufgetragen, das zur Verklebung der ersten Scheibe 1 und zweiten Scheibe 2 dient und somit entscheidend zur mechanischen Stabilität des Systems beiträgt.

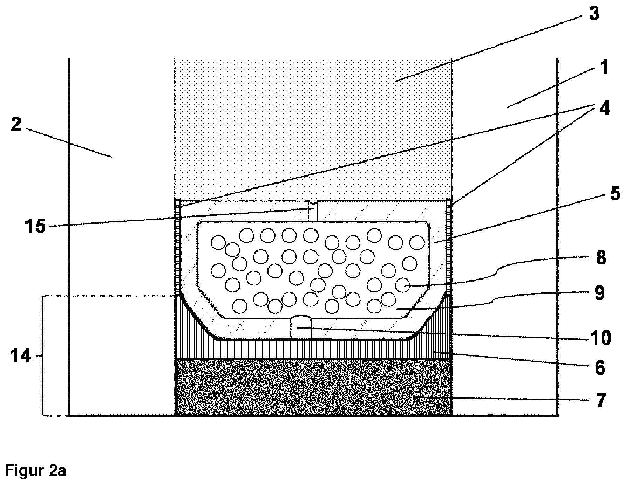

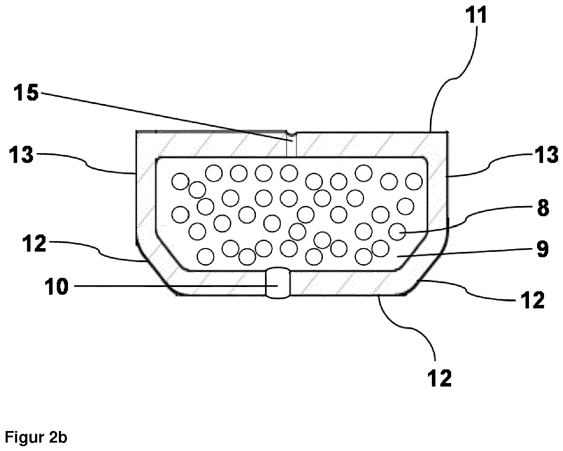

Figur 2a und 2b zeigen eine mögliche Ausführungsform der erfindungsgemäßen Isolierverglasung. Der Aufbau entspricht dabei in seinen Grundzügen dem in Figur 1 gezeigten Schema. Zwischen einer ersten Scheibe 1 und einer zweiten Scheibe 2 ist ein Abstandshalter 5 angebracht. Der Abstandshalter 5 ist ein Hohlkörperprofil umfassend zwei Scheibenkontaktflächen 13, eine Verglasungsinnenraumfläche 11, eine Außenfläche 12 und eine Hohlkammer 9. Der Abstandshalter 5 enthält Styrol-Acryl-Nitryl (SAN) und etwa 35 Gew.-% Glasfaser. Die Außenfläche 12 besitzt eine abgewinkelte Form, wobei die den Scheibenkontaktflächen 13 benachbarten Abschnitte der Außenfläche in einem Winkel von 30° zu den Scheibenkontaktflächen 13 geneigt sind. Dies verbessert die Stabilität des glasfaserverstärkten polymeren Abstandshalters 5. Der Hohlkörper 9 ist mit einem Trockenmittel 8 gefüllt, das über eine äußere Bohrung 10 in den Abstandshalter 5 eingebracht wurde. Die äußere Bohrung 10 kann sich entweder, wie gezeigt, in der Außenfläche 12 des Abstandshalters 5 befinden oder alternativ auch in einer der Scheibenkontaktflächen 13. Als Trockenmittel 8 wird Molekularsieb eingesetzt. Die Verglasungsinnenraumfläche 11 des Abstandshalters 5 weist Öffnungen 15 auf, die in regelmäßigen Abständen umlaufend entlang der Verglasungsinnenraumfläche 11 angebracht sind um einen Gasaustausch zwischen dem Verglasungsinnenraum 3 und der Hohlkammer 9 zu ermöglichen. Somit wird eventuell vorhandene Luftfeuchtigkeit im Verglasungsinnenraum 3 vom Trockenmittel 8 aufgenommen. Die Öffnungen 15 sind als Schlitze mit einer Breite von 0,2 mm und einer Länge von 2 mm ausgeführt. Der Verglasungsinnenraum 3 ist mit Argon gefüllt. Zwischen jeweils einer Scheibenkontakt-fläche 13 und der benachbarten Scheibe 1, 2 ist ein primäres Dichtmittel 4 mit einer Dicke von 0,2 mm eingebracht, das den Spalt zwischen Scheibe 1, 2 und Abstandshalter 5 abdichtet. Das primäre Dichtmittel 4 ist Polyisobutylen mit einem Penetrationswert von 50-70. Auf der Außenfläche 12 des Abstandshalters 5 ist ein sekundäres Dichtmittel 6 aufgebracht, das den äußeren Scheibenzwischenraum 14 in seiner gesamten Breite zwischen der ersten Scheibe 1 und der zweiten Scheibe 2 ausfüllt, wobei sowohl das primäre Dichtmittel 4 als auch die Außenfläche 12 des Abstandshalters 5 vollständig bedeckt sind. Somit wird auch die äußere Bohrung 10 des Abstandshalters 5 durch das sekundäre Dichtmittel 6 versiegelt. Das sekundäre Dichtmittel 6 ist Polyisobutylen mit einem Penetrationswert von 36. Die Dicke des sekundären Dichtmittels 6 im äußeren Scheibenzwischenraum 14 beträgt 2 mm. Sowohl das primäre Dichtmittel 4 als auch das sekundäre Dichtmittel 6 sind gas- und wasserundurchlässig und bilden somit einen redundanten Schutz des Verglasungsinnenraums 3 vor Feuchtigkeitseintritt und Austritt von Argon. Da das sekundäre Dichtmittel 6 einen kleineren Penetrationswert und somit eine größere Härte als das primäre Dichtmittel 4 besitzt, beginnt das sekundäre Dichtmittel 4 auch bei Erwärmung, z.B. durch starke Sonneneinstrahlung, nicht zu fließen, während das weichere primäre Dichtmittel 4 ein solches unerwünschtes Fließverhalten zeigt. Die Verwendung eines weicheren primären Dichtmittels 4 ist jedoch notwendig, da ein hartes Material im Verarbeitungsprozess nicht flexibel genug ist um den schmalen Spalt zwischen Abstandshalter 5 und den benachbarten Scheiben 1, 2 defektfrei und gleichmäßig auszufüllen. Je nach Anwendungsgebiet sind demnach die Eigenschaften der verwendeten Dichtmittel zu wählen. Durch die Wahl eines weichen Materials mit hohem Penetrationswert als primäres Dichtmittel 4 und eines härteren Materials mit niedrigerem Penetrationswert als sekundäres Dichtmittel 6 und deren Synergie kann die erfindungsgemäße Isolier-verglasung somit weiter verbessert werden. Auf dem sekundären Dichtmittel 6 ist ein tertiäres Dichtmittel 7 im äußeren Scheibenzwischenraum 14 angebracht, das der Verklebung der ersten Scheibe 1 und der zweiten Scheibe 2 dient. Das tertiäre Dichtmittel 7 ist Silikon und ist in einer Dicke von 10 mm in den äußeren Scheibenzwischenraum 14 eingebracht. Das tertiäre Dichtmittel 7 schließt bündig mit den Scheibenkanten der ersten Scheibe 1 und der zweiten Scheibe 2 ab. Das tertiäre Dichtmittel 7 ist durchlässig für Gas und Wasser, ist aber aufgrund seiner sehr guten Haftung am Glas von enormer Wichtigkeit für die mechanische Stabilität der Isolierverglasung.

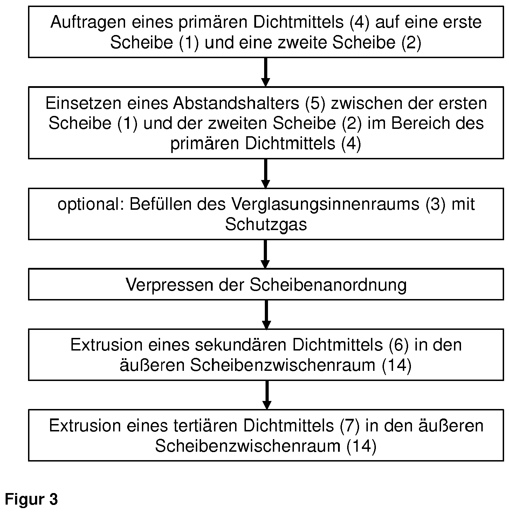

Figur 3 zeigt ein Fließdiagramm einer möglichen Ausführungsform des erfindungsgemäßen Verfahrens. Zunächst wird ein Abstandshalter 5 über ein primäres Dichtmittel 4 zwischen einer ersten Scheibe 1 und einer zweiten Scheibe 2 montiert, wobei ein primäres Dichtmittel 4 zwischen den Scheibenkontaktflächen 13 des Abstandshalters 5 und den Scheiben 1, 2 eingebracht wird. Der Verglasungsinnenraum 13 kann optional mit einem Schutzgas gefüllt werden. Beim anschließenden Verpressen der Scheibenanordnung wird das primäre Dichtmittel 4 gleichmäßig im Spalt zwischen Abstandshalter 5 und benachbarter Scheibe 1, 2 verteilt und dichtet diesen ab. Das primäre Dichtmittel 4 wird beispielsweise als Rundstrang von 1 mm bis 2 mm Durchmesser aufgetragen und besitzt nach dem Verpressen eine Dicke von beispielsweise 0,2 mm. Um eine derartige Verarbeitung zu begünstigen ist es vorteilhaft ein weiches Material mit einem Penetrationswert von 45 bis 100 als primäres Dichtmittel 4 zu verwenden. Nach dem Verpressen der Scheibenanordnung wird zunächst ein sekundäres Dichtmittel 6 in den äußeren Scheiben-zwischenraum 14 eingebracht, das direkt bündig an den Abstandshalter 5 angrenzt. Daraufhin wird ein tertiäres Dichtmittel 7 angrenzend an das sekundäre Dichtmittel 6 in den äußeren Scheibenzwischenraum 14 eingebracht, wobei das tertiäre Dichtmittel 7 bündig mit den Kanten der Scheiben 1, 2 abschließt. Das sekundäre Dichtmittel 6 und das tertiäre Dichtmittel 7 werden bevorzugt direkt in den äußeren Scheibenzwischenraum 14 extrudiert.

### Bezugszeichenliste

- 1: erste Scheibe
- 2: zweite Scheibe
- 3: Verglasungsinnenraum
- 4: primäres Dichtmittel
- 5: Abstandshalter
- 6: sekundäres Dichtmittel
- 7: tertiäres Dichtmittel
- 8: Trockenmittel
- 9: Hohlkammer
- 10: äußere Bohrung
- 11: Verglasungsinnenraumfläche
- 12: Außenfläche
- 13: Scheibenkontaktflächen
- 14: äußerer Scheibenzwischenraum
- 15: Öffnungen

## Patentansprüche

1. Isolierverglasung mindestens umfassend
- eine erste Scheibe (1) und eine zweite Scheibe (2),
- einen Abstandshalter (5) zwischen der ersten Scheibe (1) und der zweiten Scheibe (2), der Abstandshalter (5) umfassend eine Verglasungsinnenraumfläche (11), eine Außenfläche (12) und zwei Scheibenkontaktflächen (13),
- einen Verglasungsinnenraum (3) umrandet von den Innenseiten der ersten Scheibe (1) und der zweiten Scheibe (2) und der Verglasungsinnenraumfläche (11) des Abstandshalters (5),
- einen äußeren Scheibenzwischenraum (14) angrenzend an die erste Scheibe (1), die zweite Scheibe (2) und die Außenfläche (12),
wobei
- ein primäres Dichtmittel (4) jeweils zwischen einer Scheibenkontaktfläche (13) und der ersten Scheibe (1) sowie zwischen der anderen Scheibenkontaktfläche (13) und der zweiten Scheibe (2) angebracht ist,
- ein sekundäres Dichtmittel (6) im äußeren Scheibenzwischenraum (14) zwischen der ersten Scheibe (1) und der zweiten Scheibe (2) angrenzend an die Außenfläche (12) angebracht ist, und
- ein tertiäres Dichtmittel (7) im äußeren Scheibenzwischenraum (14) zwischen der ersten Scheibe (1) und der zweiten Scheibe (2) angrenzend an das sekundäre Dichtmittel (6) angebracht ist,
**dadurch gekennzeichnet, dass** der Penetrationswert des sekundären Dichtmittels (6) kleiner als der Penetrationswert des primären Dichtmittels (4) ist, wobei sich die Angaben auf den Penetrationswert nach ISO 2137 - DIN 5180 beziehen, gemessen bei einer Tempeeratur von 60 °C.

2. Isolierverglasung nach Anspruch 1, wobei das sekundäre Dichtmittel (6) und das primäre Dichtmittel (4) Butylkautschuk, Polyisobutylen, Polyethylenvinylalkohol, Ethylenvinylacetat, Polyolefin-Kautschuk, Copolymere und/oder Gemische davon enthalten.

3. Isolierverglasung nach Anspruch 1 oder 2, wobei das tertiäre Dichtmittel (7) Polysulfide, Silikone, Silikonkautschuk, Polyurethane, Polyacrylate, Copolymere und/oder Gemische davon enthält.

4. Isolierverglasung nach einem der Ansprüche 1 bis 3, wobei der Penetrationswert des primären Dichtmittels zwischen 45 und 100 und der Penetrationswert des sekundären Dichtmittels (6) zwischen 20 und 40 liegt.

5. Isolierverglasung nach einem der Ansprüche 1 bis 4, wobei die Dicke des sekundären Dichtmittels (6) 0,5 mm bis 5 mm, bevorzugt 1 mm bis 2 mm beträgt.

6. Isolierverglasung nach einem der Ansprüche 1 bis 5, wobei die Dicke des tertiären Dichtmittels (7) 2 mm bis 30 mm, bevorzugt 5 mm bis 10 mm beträgt.

7. Isolierverglasung nach einem der Ansprüche 1 bis 6, wobei die Isolierverglasung mehr als zwei Scheiben umfasst.

8. Isolierverglasung nach Anspruch 7, wobei sich eine dritte Scheibe zwischen der ersten Scheibe (1) und der zweiten Scheibe (2) befindet.

9. Isolierverglasung nach Anspruch 7, wobei an der ersten Scheibe (1) und/oder zweiten Scheibe (2) ein weiterer Abstandshalter (5) mit einer dritten Scheibe parallel zu dem zwischen erster Scheibe (1) und zweiter Scheibe (2) befindlichen Abstandshalter (5) angebracht ist.

10. Isolierverglasung nach einem der Ansprüche 1 bis 9, wobei der Abstandshalter (5) Polymere oder Metalle, bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), besonders bevorzugt Acrylnitril-Butadien-Styrol (ABS), Acrylester-Styrol-Acrylnitril (ASA), Acrylnitril-Butadien-Styrol / Polycarbonat (ABS/PC), Styrol-Acrylnitril (SAN), PET/PC, PBT/PC, Aluminium, Edelstahl und/oder Copolymere oder Gemische davon enthält.

11. Isolierverglasung nach einem der Ansprüche 1 bis 10, wobei die erste Scheibe (1) und/oder die zweite Scheibe (2) Glas und/oder Polymere, bevorzugt Quarzglas, Borosilikatglas, Kalk-Natron-Glas, Polymethylmethacrylat und/oder Gemische davon enthalten.

12. Verfahren zur Herstellung einer Isolierverglasung nach einem der Ansprüche 1 bis 11, wobei zumindest
a) der Abstandshalter (5) mittels eines primären Dichtmittels (4) über jeweils eine Scheibenkontaktfläche (13) an der ersten Scheibe (1) und der zweiten Scheibe (2) angebracht wird,
b) die Anordnung verpresst wird,
c) in den äußeren Scheibenzwischenraum (14) ein sekundäres Dichtmittel (6) eingefüllt wird und
d) in den äußeren Scheibenzwischenraum (14) ein tertiäres Dichtmittel (7) eingefüllt wird.

13. Verfahren nach Anspruch 12, wobei Schritt a) und Schritt c) gleichzeitig erfolgen und das sekundäre Dichtmittel (6) und das primäre Dichtmittel (4) gleichzeitig aufgebracht werden.

14. Verwendung einer Isolierverglasung nach einem der Ansprüche 1 bis 11 als Gebäudeinnenverglasung, Gebäudeaußenverglasung und/oder Fassadenverglasung.

## Claims

1. Insulating glazing unit comprising at least
- a first pane (1) and a second pane (2),
- a spacer (5) between the first pane (1) and the second pane (2), the spacer (5) comprising a glazing interior surface (11), an external surface (12), and two pane contact surfaces (13),
- a glazing interior (3) bordered by the inner faces of the first pane (1) and of the second pane (2) and the glazing interior surface (11) of the spacer (5),
- an external interpane space (14) adjacent the first pane (1), the second pane (2), and the external surface (12),
wherein
- a primary sealant (4) is fixed in each case between one pane contact surface (13) and the first pane (1) as well as between the other pane contact surface (13) and the second pane (2),
- a secondary sealant (6) in the external interpane space (14) is fixed between the first pane (1) and the second pane (2) adjacent the external surface (12), and
- a tertiary sealant (7) in the external interpane space (14) is fixed between the first pane (1) and the second pane (2) adjacent the secondary sealant (6),
**characterized in, that** the penetration index of the secondary sealant (6) is less than the penetration index of the primary sealant (4), wherein the indications refer to the penetration index per ISO 2137 - DIN 5180 measured at a temperature of 60 °C.

2. Insulating glazing unit according to claim 1, wherein the secondary sealant (6) and the primary sealant (4) contain butyl rubber, polyisobutylene, polyethylene vinyl alcohol, ethylene vinyl acetate, polyolefin rubber, copolymers, and/or mixtures thereof.

3. Insulating glazing unit according to claim 1 or 2, wherein the tertiary sealant (7) contains polysulfides, silicones, silicone rubber, polyurethanes, polyacrylates, copolymers, and/or mixtures thereof.

4. Insulating glazing unit according to one of claims 1 through 3, wherein the penetration index of the primary sealant is between 45 and 100 and the penetration index of the secondary sealant (6) is between 20 and 40.

5. Insulating glazing unit according to one of claims 1 through 4, wherein the thickness of the secondary sealant (6) is 0.5 mm to 5 mm, preferably 1 mm to 2 mm.

6. Insulating glazing unit according to one of claims 1 through 5, wherein the thickness of the tertiary sealant (7) is 2 mm to 30 mm, preferably 5 mm to 10 mm.

7. Insulating glazing unit according to one of claims 1 through 6, wherein the insulating glazing unit includes more than two panes.

8. Insulating glazing unit according to claim 7, wherein a third pane is situated between the first pane (1) and the second pane (2).

9. Insulating glazing unit according to claim 7, wherein an additional spacer (5) with a third pane is fixed on the first pane (1) and/or the second pane (2) parallel to the spacer (5) situated between the first pane (1) and the second pane (2).

10. Insulating glazing unit according to one of claims 1 through 9, wherein the spacer (5) contains polymers or metals, preferably polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), particularly preferably acrylonitrile butadiene styrene (ABS), acrylonitrile styrene acrylester (ASA), acrylonitrile butadiene styrene / polycarbonate (ABS/PC), styrene acrylonitrile (SAN), PET/PC, PBT/PC, aluminum, stainless steel, and/or copolymers or mixtures thereof.

11. Insulating glazing unit according to one of claims 1 through 10, wherein the first pane (11 and/or the second pane (2) contain glass and/or polymers, preferably quartz glass, borosilicate glass, soda lime glass, polymethyl methacrylate, and/or mixtures thereof.

12. Method for producing an insulating glazing unit according to one of claims 1 through 11, wherein at least
a) the spacer (5) is fixed on the first pane (1) and the second pane (2) by means of a primary sealant (4) via in each case a pane contact surface (13),
b) the arrangement is pressed,
c) a secondary sealant (6) is filled into the external interpane space (14), and
d) a tertiary sealant (7) is filled into the external interpane space (14).

13. Method according to claim 12, wherein step a) and step c) are performed simultaneously and the secondary sealant (6) and the primary sealant (4) are applied simultaneously.

14. Use of an insulating glazing unit according to one of claims 1 through 11 as building interior glazing, building exterior glazing, and/or façade glazing.

## Revendications

1. Vitrage isolant comprenant au moins
- une première vitre (1) et une deuxième vitre (2),
- un intercalaire (5) entre la première vitre (1) et la deuxième vitre (2), l'intercalaire (5) comprenant une surface intérieure de vitre (11), une surface extérieure (12), et deux surfaces de contact de vitre (13),
- un intérieur de vitrage (3) bordé par les faces intérieures de la première vitre (1) et de la deuxième vitre (2) et la surface intérieure de vitre (11) de l'intercalaire (5),
- un espace interstitiel des vitrage extérieure (14) adjacent à la première vitre (1), à la deuxième vitre (2) et à la surface extérieure (12),
dans lequel
- un mastic d'étanchéité primaire (4) est fixé dans chaque cas entre une surface de contact de la vitre (13) et la première vitre (1) ainsi qu'entre l'autre surface de contact de vitre (13) et la deuxième vitre (2),
- un mastic d'étanchéité secondaire (6) dans l'espace interstitiel de vitrage extérieure (14) est fixé entre la première vitre (1) et la deuxième vitre (2) adjacente à la surface extérieure (12), et
- un mastic d'étanchéité tertiaire (7) dans l'espace interstitiel de vitrage extérieure (14) est fixé entre la première vitre (1) et la deuxième vitre (2) à côté du mastic d'étanchéité secondaire (6),
**caractérisé par le fait que** l'indice de pénétration du mastic d'étanchéité secondaire (6) est inférieur à l'indice de pénétration du mastic d'étanchéité primaire (4), les indications se référant à l'indice de pénétration selon ISO 2137 - DIN 5180 mesuré à une température de 60 °C.

2. Vitrage isolant selon la revendication 1, dans lequel le mastic d'étanchéité secondaire (6) et le mastic d'étanchéité primaire (4) contiennent du caoutchouc butyle, du polyisobutylène, de l'alcool vinylique de polyéthylène, de l'acétate de vinyle d'éthylène, du caoutchouc de polyoléfine, des copolymères et/ou des mélanges de ceux-ci.

3. Vitrage isolant selon la revendication 1 ou 2, dans lequel le mastic d'étanchéité tertiaire (7) contient des polysulfures, des silicones, des caoutchoucs de silicone, des polyuréthanes, des polyacrylates, des copolymères et/ou des mélanges de ceux-ci.

4. Vitrage isolant selon l'une des revendications 1 à 3, dans lequel l'indice de pénétration du mastic d'étanchéité primaire est compris entre 45 et 100 et l'indice de pénétration du mastic d'étanchéité secondaire (6) est compris entre 20 et 40.

5. Vitrage isolant selon l'une des revendications 1 à 4, dans lequel l'épaisseur du mastic d'étanchéité secondaire (6) est comprise entre 0,5 mm et 5 mm, de préférence entre 1 mm et 2 mm.

6. Vitrage isolant selon l'une des revendications 1 à 5, dans lequel l'épaisseur du mastic d'étanchéité tertiaire (7) est de 2 mm à 30 mm, de préférence de 5 mm à 10 mm.

7. Vitrage isolant selon l'une des revendications 1 à 6, dans lequel le vitrage isolant comprend plus de deux vitres.

8. Vitrage isolant selon la revendication 7, dans lequel une troisième vitre est située entre la première vitre (1) et la deuxième vitre (2).

9. Vitrage isolant selon la revendication 7, dans lequel un espaceur supplémentaire (5) avec une troisième vitre est fixé sur la première vitre (1) et/ou la deuxième vitre (2) parallèlement à l'espaceur (5) situé entre la première vitre (1) et la deuxième vitre (2).

10. Vitrage isolant selon l'une des revendications 1 à 9, dans lequel l'intercalaire (5) contient des polymères ou des métaux, de préférence du polyéthylène (PE), des polycarbonates (PC), du polypropylène (PP), du polystyrène, du polybutadiène, des polynitriles, des polyesters, des polyuréthanes, des polyméthacrylates de méthyle, des polyacrylates, des polyamides, polyéthylène téréphtalate (PET), polybutylène téréphtalate (PBT), de préférence acrylonitrile butadiène styrène (ABS), acrylonitrile styrène acrylester (ASA), acrylonitrile butadiène styrène / polycarbonate (ABS/PC), styrène acrylonitrile (SAN), PET/PC, PBT/PC, aluminium, acier inoxydable, et/ou copolymères ou mélanges de ceux-ci.

11. Vitrage isolant selon l'une des revendications 1 à 10, dans lequel la première vitre (11) et/ou la deuxième vitre (2) contiennent du verre et/ou des polymères, de préférence du verre de quartz, du verre borosilicaté, du verre sodocalcique, du polyméthacrylate de méthyle, et/ou des mélanges de ceux-ci.

12. Procédé de fabrication d'un vitrage isolant selon l'une des revendications 1 à 11, dans lequel au moins
a) l'intercalaire (5) est fixé sur la première vitre (1) et la deuxième vitre (2) au moyen d'un mastic d'étanchéité primaire (4) par l'intermédiaire d'une surface de contact avec la vitre (13),
b) l'arrangement est pressé,
c) un mastic d'étanchéité secondaire (6) est versé dans l'espace interstitiel de vitrage extérieure (14), et
d) un mastic d'étanchéité tertiaire (7) est versé dans l'espace interstitiel de vitrage extérieure (14).

13. Procédé selon la revendication 12, dans lequel les étapes a) et c) sont réalisées simultanément et le mastic d'étanchéité secondaire (6) et le mastic d'étanchéité primaire (4) sont appliqués simultanément.

14. Utilisation d'un vitrage isolant selon l'une des revendications 1 à 11 comme vitrage intérieur d'un bâtiment, vitrage extérieur d'un bâtiment et/ou vitrage de façade.
